# EUROPEAN PATENT SPECIFICATION

(11) **EP 3 628 481 B1**
(45) Date of publication and mention of the grant of the patent: **03.11.2021**
(21) Application number: 18197100.3
(22) Date of filing: 27.09.2018
(51) Int. Cl.: B32B 5/02, B32B 5/12, B32B 5/14, B32B 5/24, B32B 7/14, B32B 15/14, B32B 19/04, B32B 19/06, B32B 21/10, B32B 7/05, B32B 7/03, B32B 7/022, B32B 7/027

(54) **A SANDWICH PANEL**
SANDWICHPLATTE
PANNEAU EN SANDWICH

(43) Date of publication of application: 01.04.2020
(73) Proprietor: Rockwool International A/S, 2640 Hedehusene (DK)
(72) Inventor: Braun, Bouke Christiaan, 5642 NT Eindhoven (NL); Ghijzen, Cornelis Johannes Maria, 6114 MZ Susteren (NL); L'Hostis, Jean-Yves Michel Max, 75013 Paris (FR)
(74) Representative: Høiberg P/S

(56) References cited:
- EP-A1- 2 402 150
- EP-A2- 0 449 414
- WO-A1-2016/083368
- US-A1- 2005 166 539

## Description

The present invention relates to a sandwich panel comprising a sandwich panel core having a top and bottom surface and made of low density and high density lamellae of mineral wool fibres arranged such that alternately low density lamellae and high density lamellae are provided; at least one outer sheet facing adhesively secured to at least one of the top or bottom surfaces of the panel core.

Sandwich panels of this kind are well-known to be used as self-supporting panels or walls or roofs in industrial buildings or the like.

In WO 92/10602 there is disclosed a method of producing sandwich panel core composed of interconnected mineral wool fibre lamellae, where the general fibre direction of in the lamellae is predominantly at right angles to the major surfaces of the resulting sandwich panel to increase compression strength. In WO 2005/124048 there is disclosed a reinforced sandwich panel core, where there are reinforcements in the core to increase compression strength.

To improve the thermal insulation performance of such a panel it is desired to reduce the density. This is also advantageous from a cost perspective. However, when the density of the mineral wool core, i.e. the base layer, is reduced the compression strength is reduced too.

WO 2016/083368 discloses a simple method for producing a panel with increased compression strength of the core, i.e. the base layer. By cutting the product into lamellae and then rotating the lamellae around their longitudinal axis by 90 degrees, the high density top layer of the dual density mineral fibre product will then form reinforcing stringers that ensure the necessary compression strength of the panel. This provides a panel with increased compression strength and with a cost-effective production of the panel. This also allows for a significant reduction of the average density of the sandwich panel.

However, by the present invention it is found that the sandwich panels of the initially mentioned kind can be further improved, by the outer sheet facing being adhesively secured by glue applied substantially only in stripes at the high density lamellae.

In one embodiment of the invention, a sandwich panel is comprising a sandwich panel core having a top and bottom surface and made of low density and high density lamellae of mineral wool fibres arranged such that alternately low density lamellae and high density lamellae are provided; at least one outer sheet facing adhesively secured to at least one of the top or bottom surfaces of the panel core; and wherein the outer sheet facing is adhesively secured by glue applied substantially only in stripes at the high density lamellae.

The provision of the low density and the high density lamellae is in one embodiment carried out such that one high density lamella follows a low density lamella and then a low density lamella follows the high density lamella, etc., such that there is a strict alternating sequence of a high density lamella following a low density lamella.

In another embodiment, the strict alternating sequence may be deviated from for example by letting a low density lamella follow another low density lamella, such occurrence taking place once per lamella core, such as twice, such as three times, such as four times in a lamella core.

In yet another embodiment, the strict alternating sequence may be deviated from for example by letting a high density lamella follow another high density lamella, such occurrence taking place once per lamella core, such as twice, such as three times, such as four times in a lamella core.

By the invention it is found that full surface bonding between the sheet facings and the core layer is not necessary, when the core layer includes high density lamellae or stringers. By only gluing the facing sheets to the high density stringers, it is advantageously found that the stringers can provide mechanical rigidness of the fibre sandwich panel. Hereby, a reduction in the consumption of glue is achieved which also reduces the fire-load and the overall weight of the sandwich panel, as the density of the low density lamellae can be further reduced.

By the invention it is realised that the low density lamellae are only required to support the neighbouring high density lamellae so that the high density lamellae do not buckle when subjected to a compression load. It is found that a saving of glue compared to a full bonding is in excess of 50%, and in most embodiments in the order of 70%.

According to the invention, glue is applied on the facings only at stripes corresponding to and facing the high density lamellae. However, it is preferred to provide these stripes of glue with a width, which is slightly wider than the high density lamellae. Furthermore, in order to prevent the facing from becoming detached from the sandwich core, it is preferred that the glue is also applied at edge regions of facing.

The stripes of glue may be substantially straight unbroken solid stripes and/or the stripes may be broken stripes, such as dotted stripes and/or dashed stripes and/or gradient stripes.

In one embodiment, the edge region is a part of the top and/or bottom surface and the edge region is part of an end lamella, said end lamella being at one end of the lamella core.

In an embodiment of the invention, the low density lamellae are made of mineral wool fibres having a density of 40-100 kg/m³, preferably 60-70 kg/m³.

In an embodiment of the invention, the high density lamellae are made of mineral wool fibres having a density of 100-250 kg/m³, preferably 150-250 kg/m³.

Preferably, outer sheet facings are provided at both the top and the bottom surface of the sandwich core.

In some preferred embodiments, the outer sheet facing is a metal sheet. However, by the invention it is realised that other types of facing sheets may be used, such as glass fibre or wood fibre reinforced facings and mineral wool composite facings.

In a second aspect of the invention there is provided a method of producing a sandwich panel according to any one of the preceding claims. Said method is defined in appended independent claim 9.

In order to automate the manufacturing of the sandwich panel, it may be found useful that the step of applying stripes of glue to the outer sheet facing involves the step of visually or optically identifying the surface areas of the high density lamellae to guide the glue application.

It is found advantageous to produce the neighbouring high density and low density lamellae by cutting a dual density mineral wool fibre slab.

In the following the present invention is described in further detail with reference to the accompanying drawings, in which:
- Fig. 1: is a schematic cross-sectional view of a sandwich panel according to an embodiment of the invention;
- Fig. 2: is a top view of a sandwich panel according to an embodiment of the invention; and
- Figures 3 and 4: show schematic cross-sectional views of a method of manufacturing a sandwich panel according to the invention.

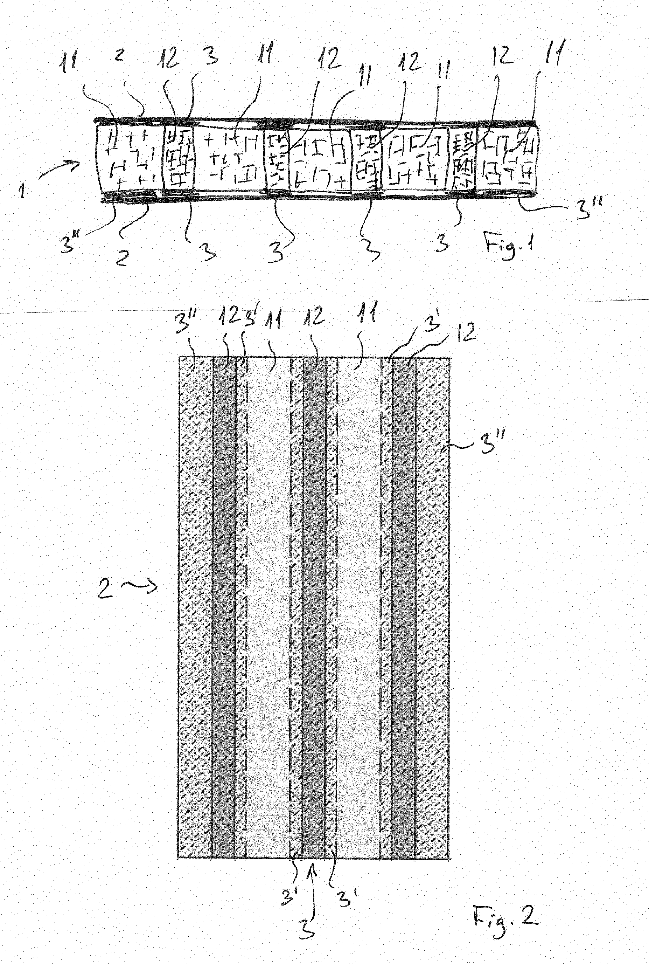

With reference to fig. 1 and 2, a sandwich panel according to an embodiment of the invention is shown. The sandwich panel comprises a mineral wool fibre core layer 1 sandwiched between two metal sheet facings 2. The core layer is made up by two types of mineral wool lamellae 11, 12. The two types are low density mineral wool fibre lamellae 11 and high density mineral wool fibre lamellae 12. The two types of lamellae 11, 12 are arranged adjacent each other such that on each side of a high density lamellae 12 there are provided low density lamellae 11. The outer facings 2, which in a preferred embodiment may be metal sheets, are glued to the core layer at the points of contact between the high density lamellae 12 and the facings 2 only.

As it is apparent from fig. 2, the outer sheet facing 2 being adhesively secured by glue applied substantially only in stripes 3 at the high density lamellae 12.

By only gluing the sheet facing 2 to the high density lamellae 12 (or stringers), the lamellae 12 and the facing sheets 2 sufficient provide mechanical rigidness of the fibre sandwich panel. Hereby, a reduction in the consumption of glue is achieved and the density of the low density lamellae 11 can be reduced saving overall weight of the panel. In this construction, the low density lamellae 11 are only required to support the neighbouring high density lamellae 12 so that the high density lamellae 12 do not buckle when subjected to a compression load.

As shown in fig. 2, the glue is only applied on the facings in stripes 3 corresponding to and facing the high density lamellae 12. However, it is preferred to provide these stripes 3 of glue with a width, which is slightly wider as indicated by 3' than the high density lamellae 12. Furthermore, in order to prevent the facing 2 from becoming detached from the sandwich core 1, it is preferred in some embodiments that the glue 3 is also applied at edge regions 3" of facing 2.

As it can be appreciated from fig. 2, a saving of glue compared to a full bonding according to the invention may be in excess of 50%, and in most embodiments in the order of 70%.

It is found advantageous if increased mechanical performance of the sandwich panel is required to increase the amount of glue applied in the stripes, e.g. from 120 g/m² to 240 g/m² or even up to 400 g/m², whereby the amount of glue of the sandwich panel product does not compromise the calorific value for obtaining the A2 European fire classification.

In an embodiment of the invention, the width of the low density lamellae 11 may be 80-90 mm, preferably 85 mm, and the width of the high density lamellae 12 may be 15-25, for instance 17 mm, so the low density lamellae 11 may have a width in the order of five times the high density lamellae 12. By the invention, it is realised that the ratio between the width of the low density lamellae and the high density lamellae may be varied and can be chosen according to the specific circumstances in which the sandwich panel is designed for. The low density lamellae 11 are made of mineral wool fibres having a density of 40-100 kg/m³, preferably 60-70 kg/m³ and the high density lamellae 12 are made of mineral wool fibres having a density of 100- 250 kg/m³, preferably 150-250 kg/m³.

Preferably, outer sheet facings are provided at both the top and the bottom surface of the sandwich core. The outer sheet facing is in some preferred embodiments a metal sheet. However, by the invention it is realised that other types of facing sheets may be used, such as glass fibre or wood fibre reinforced facings.

The sandwich panel may be manufactured by forming a sandwich panel core layer 1 by arranging the lamellae 11, 12 adjacent each other arranged such that alternately low density lamellae 11 and high density lamellae 12 are provided and adhesively joined together. The outer sheet facing 2 is then applied with stripes 3, 3', 3" of glue equal to or slightly wider than the high density lamellae 12, and then bonded to the sandwich panel core by gluing said facing to the core 1 at the stripes of glue.

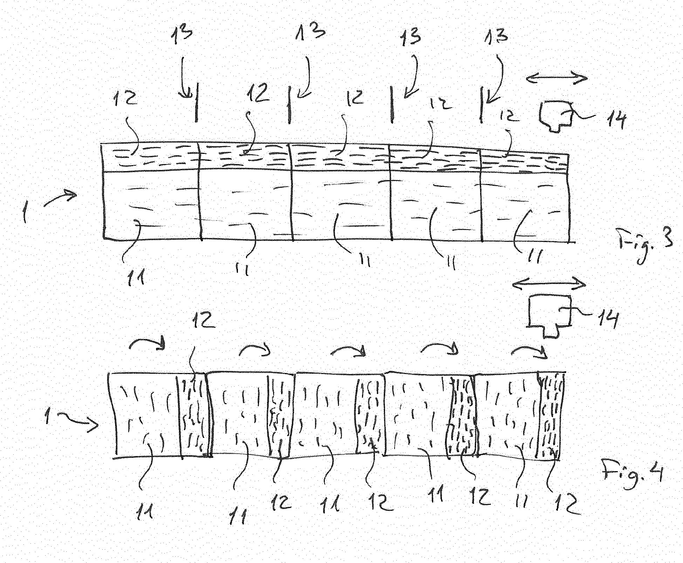

With reference to figures 3 and 4, it is found advantageous for some embodiments to produce the neighbouring high density lamellae 12 and low density lamellae 11 by cutting a dual density mineral wool fibre slab into elongated members. In fig. 3 a dual density mineral wool fibre slab is shown, which has been cut into elongated members by cutting members 13. A glue applicator 14 may apply glue to the top of the high density layer/lamellae 12, such that when the elongated members are rotated as indicated in fig. 4 the elongated members become attached to each other in the correct configuration for the provision of a core layer 1 in a sandwich layer according to the invention.

In general, when terms like "horizontal", "vertical", "top", "bottom" and similar directional references are used in the present disclosure, these terms are meant to be understood as relative terms e.g. where the term "vertical" refers to the direction of the thickness of the web, panel or product and "horizontal" refers to a direction perpendicular to the thickness of the web, panel or product.

Above, the invention is described with reference to one preferred embodiment of the invention. However, it is realised that other variant may be provided without departing from the scope of the accompanying claims.

## Claims

1. A sandwich panel comprising
a sandwich panel core having a top and bottom surface and made of low density and high density lamellae of mineral wool fibres arranged such that alternately low density lamellae and high density lamellae are provided;
at least one outer sheet facing adhesively secured to at least one of the top or bottom surfaces of the panel core;
**characterised in that**
the outer sheet facing is adhesively secured by glue applied substantially only in stripes at the high density lamellae.

2. A sandwich panel according to claim 1, wherein the glue is also applied at edge regions of facing.

3. A sandwich panel according to claim 1 or 2, wherein the low density lamellae are made of mineral wool fibres having a density of 40-100 kg/m³, preferably 60-70 kg/m³.

4. A sandwich panel according to any one of the preceding claims, wherein the high density lamellae are made of mineral wool fibres having a density of 150-500 kg/m³, such as 150-300 kg/m³, such as 200-250 kg/m³.

5. A sandwich panel according to any one of the preceding claims, wherein the amount of glue applied in the stripes is between 80 g/m² to 500 g/m² such as 120 g/m² to 240 g/m² or up to 400 g/m²,

6. A sandwich panel according to any one of the preceding claims, wherein outer sheet facings are provided at both the top and the bottom surface of the sandwich core.

7. A sandwich panel according to any one of the preceding claims, wherein the outer sheet facing is a metal sheet.

8. A sandwich panel according to any one of the preceding claims, wherein the outer facing is glass fibre or wood fibre reinforced facings.

9. A method of producing a sandwich panel according to any one of the preceding claims, said method comprising the steps of:
- forming a sandwich panel core layer by arranging a plurality of lamellae adjacent each other arranged such that alternately low density lamellae and high density lamellae are provided and adhesively joining said lamellae,
- providing an outer sheet facing and applying glue in stripes corresponding to the high density lamellae, and then
- adhesively securing the outer facing to the sandwich panel core by gluing said facing to the core at the stripes of glue.

10. A method according to claim 9, whereby the step of applying stripes of glue to the outer sheet facing involves the step of visually or optically identifying the surface areas of the high density lamellae to guide the glue application.

11. A method according to claim 9 or 10, whereby neighbouring high density and low density lamellae are produced from cutting a dual density mineral wool fibre slab.

## Patentansprüche

1. Sandwichplatte, die Folgendes umfasst:
einen Sandwichplattenkern, der eine Ober- und eine Unterseite aufweist und aus Lamellen aus Mineralwollfasern mit geringer Dichte und hoher Dichte gefertigt ist, die so angeordnet sind, dass abwechselnd Lamellen mit geringer Dichte und Lamellen mit hoher Dichte bereitgestellt sind;
mindestens einen Außenschichtüberzug, der anhaftend an mindestens einer von der Ober- oder Unterseite des Plattenkerns befestigt ist;
**dadurch gekennzeichnet, dass**
der Außenschichtüberzug durch Klebstoff, der im Wesentlichen nur in Streifen an den Lamellen mit hoher Dichte aufgebracht ist, anhaftend befestigt ist.

2. Sandwichplatte nach Anspruch 1, wobei der Klebstoff auch an Randbereichen des Überzugs aufgebracht ist.

3. Sandwichplatte nach Anspruch 1 oder 2, wobei die Lamellen mit geringer Dichte aus Mineralwollfasern gefertigt sind, die eine Dichte von 40-100 kg/m³, vorzugsweise 60-70 kg/m³, aufweisen.

4. Sandwichplatte nach einem der vorstehenden Ansprüche, wobei die Lamellen mit hoher Dichte aus Mineralwollfasern gefertigt sind, die eine Dichte von 150-500 kg/m³, wie etwa 150-300 kg/m³, wie etwa 200-250 kg/m³ aufweisen.

5. Sandwichplatte nach einem der vorstehenden Ansprüche, wobei die Menge an Klebstoff, der in den Streifen aufgebracht ist, zwischen 80 g/m² bis 500 g/m², wie etwa 120 g/m² bis 240 g/m² oder bis zu 400 g/m² beträgt.

6. Sandwichplatte nach einem der vorstehenden Ansprüche, wobei die Außenschichtüberzüge an sowohl der Oberseite als auch der Unterseite des Sandwichkerns bereitstellt sind.

7. Sandwichplatte nach einem der vorstehenden Ansprüche, wobei der Außenschichtüberzug eine Metallschicht ist.

8. Sandwichplatte nach einem der vorstehenden Ansprüche, wobei der Außenüberzug ein glasfaser- oder holzfaserverstärkter Überzug ist.

9. Verfahren zum Herstellen einer Sandwichplatte nach einem der vorstehenden Ansprüche, wobei das Verfahren die folgenden Schritte umfasst:
- Ausbilden einer Sandwichplattenkernlage durch Anordnen einer Vielzahl von Lamellen nebeneinander, so angeordnet, dass abwechselnd Lamellen mit geringer Dichte und Lamellen mit hoher Dichte bereitgestellt sind, und anhaftendes Zusammenfügen der Lamellen,
- Bereitstellen eines Außenschichtüberzugs und Aufbringen von Klebstoff in Streifen entsprechend den Lamellen mit hoher Dichte, und dann
- anhaftendes Befestigen des Außenüberzugs an dem Sandwichplattenkern durch Kleben des Überzugs an den Kern an den Streifen aus Klebstoff.

10. Verfahren nach Anspruch 9, wobei der Schritt des Aufbringens von Streifen aus Klebstoff auf den Außenschichtüberzug den Schritt des visuellen oder optischen Identifizierens der Oberflächenbereiche der Lamellen mit hoher Dichte beinhaltet, um die Aufbringung von Klebstoff zu leiten.

11. Verfahren nach Anspruch 9 oder 10, wobei benachbarte Lamellen mit geringer Dichte und hoher Dichte durch Schneiden eines Mineralwollfaserstücks mit zwei Dichten hergestellt wird.

## Revendications

1. Panneau sandwich comprenant
une âme de panneau sandwich ayant une surface supérieure et inférieure et étant constituée de lamelles à basse densité et à haute densité de fibres de laine minérale disposées de sorte que des lamelles à basse densité et des lamelles à haute densité sont fournies en alternance ;
au moins un revêtement extérieur de tôle fixé de manière adhésive à au moins l'une des surfaces supérieure ou inférieure de l'âme de panneau ;
**caractérisé en ce que**
le revêtement extérieur de tôle est fixé de manière adhésive par de la colle appliquée sensiblement uniquement en bandes aux lamelles à haute densité.

2. Panneau sandwich selon la revendication 1, dans lequel la colle est également appliquée aux régions de bord du revêtement.

3. Panneau sandwich selon la revendication 1 ou 2, dans lequel les lamelles à basse densité sont constituées de fibres de laine minérale ayant une densité de 40 à 100 kg/m³, de préférence de 60 à 70 kg/m³.

4. Panneau sandwich selon l'une quelconque des revendications précédentes, dans lequel les lamelles à haute densité sont constituées de fibres de laine minérale ayant une densité de 150-500 kg/m³, telle que 150-300 kg/m³, telle que 200-250 kg/m³.

5. Panneau sandwich selon l'une quelconque des revendications précédentes, dans lequel la quantité de colle appliquée dans les bandes est entre 80 g/m² à 500 g/m², telle que 120 g/m² à 240 g/m² ou jusqu'à 400 g/m².

6. Panneau sandwich selon l'une quelconque des revendications précédentes, dans lequel des revêtements extérieurs de tôle sont prévus à la fois sur la surface supérieure et la surface inférieure de l'âme en sandwich.

7. Panneau sandwich selon l'une quelconque des revendications précédentes, dans lequel le revêtement extérieur de tôle est une tôle métallique.

8. Panneau sandwich selon l'une quelconque des revendications précédentes, dans lequel le revêtement extérieur consiste en des revêtements renforcés de fibres de verre ou de fibres de bois.

9. Procédé de fabrication d'un panneau sandwich selon l'une quelconque des revendications précédentes, ledit procédé comprenant les étapes de :
- formation d'une couche d'âme centrale de panneau sandwich en disposant une pluralité de lamelles adjacentes les unes aux autres disposées de sorte que des lamelles à basse densité et des lamelles à haute densité sont fournies en alternance et joignent de manière adhésive lesdites lamelles,
- fourniture d'un revêtement extérieur de tôle et application de colle en bandes correspondant aux lamelles à haute densité, et puis
- fixation de manière adhésive du revêtement extérieur à l'âme de panneau sandwich par collage dudit revêtement à l'âme au niveau des bandes de colle.

10. Procédé selon la revendication 9, moyennant quoi l'étape d'application de bandes de colle sur le revêtement extérieur de tôle implique l'étape d'identification visuelle ou optique des zones de surface des lamelles à haute densité pour guider l'application de colle.

11. Procédé selon la revendication 9 ou 10, moyennant quoi des lamelles de haute densité et de basse densité voisines sont produites par la coupe d'une plaque de fibres de laine minérale à double densité.
